# EUROPEAN PATENT APPLICATION

(11) **EP 3 544 252 A1**
(43) Date of publication of application: **25.09.2019**
(21) Application number: 18162680.5
(22) Date of filing: 19.03.2018
(51) Int. Cl.: H04L 29/06

(54) **METHODS AND APPARATUS FOR CONTROLLING APPLICATION-SPECIFIC ACCESS TO A SECURE NETWORK**

(71) Applicant: Virtual Solution AG, 80636 München (DE)
(72) Inventor: VON SPRETI, Christian, 89361 Landensberg (DE); MIHATSCH, Oliver, 81735 München (DE); JAKOBI, Thomas, 85139 Wettstetten (DE)
(74) Representative: Samson & Partner Patentanwälte mbB

(57) **Abstract**

The present disclosure relates to methods and apparatuses for secure user-originating access to a service within a secure network (SN).

## Description

### Field of the invention

The present invention relates to secure electronic communication and, particularly, to secure user-originating access to a service within a secure network.

### Background

In contrast to communication environments virtually open to and for everyone, it is well known to use closed communication environments only usable for a limited group of users and devices, respectively. Examples for such closed communication environments include internal company communication networks and intranets.

In order to limit communication within and access to a closed communication environment, generally security measures are taken. Therefore, closed communication environments are also referred to as secure networks, herein.

Originally, secure networks have been physically gated off from the outside so that only communication devices physically connected (e.g. by wired links) to and/or within the secure network were allowed to use the secure network.

Using mobile communication devices and, particularly, private mobile communication devices in so-called "BYOD" (bring your own device) scenarios increases the need to access secure networks from outside.

### Object

It is an objection to provide solutions enhancing security and decrease complexity of external access to a service provided by and within a secure network.

### Summary

To solve the above objection, the present disclosure provides subject-matter according to the independent claims. Preferred embodiments are defined in dependent claims.

Particularly, the present disclosure provides a method of controlling application-specific access to a secure network arranged within a communication environment.

The secure network comprises a secure gateway device providing access to the secure network for client applications external to the secure network.

Access control data identifies an authorized client application being authorized to access at least one service provided by the secure network and further identifying at least one service provided by the secure network to which service the authorized client application is authorized to access,

The method may comprise
- receiving a first request at the secure gateway device from a requesting client application external to the secure network, the first request being an access request to access to the secure network;
- checking, by the secure gateway device, whether the first request includes information trustworthily identifying the requesting client application;
- in the case the checking indicates that the first request includes information trustworthily identifying the requesting client application, verifying, by the secure gateway device, on the basis of the access control data and the information trustworthily identifying, whether the requesting client application is the authorized client application;
- granting, by the secure gateway device, access to the secure network, in the case the verifying whether the requesting client application is the authorized client application indicates that the requesting client application is the authorized client application;
- receiving, at the secure gateway device, a second request from the requesting client application to access a requested service provided by secure network,
- verifying, by the secure gateway device, based on the access control data, whether the requesting client application is the client application authorized to access the requested service;
- granting, by the secure gateway device, access to the requested service, in the case the verifying whether the requesting client application is the client application authorized to access the requested service indicates that the requesting client application is the client application authorized to access the requested service.

The method may further comprise denying, by the secure gateway device, access to the secure network, in the case the checking indicates that the first request does not include information trustworthily identifying the requesting client application. Here, denying request may include that no communication between the requesting client application and the secure gateway device is established at all or that a communication link that has been established between the requesting client application and the secure gateway device is terminated (e.g. together with an error message or the like).

The method may further comprise denying, by the secure gateway device, access to the secure network, in the case the verifying whether the requesting client application is the authorized client application indicates that the requesting client application is not the authorized client application. Here, denying request may include that a communication link that has been established between the requesting client application and the secure gateway device is terminated (e.g. together with an error message or the like).

The method may further comprise denying, by the secure gateway device, access to the requested service, in the case the verifying whether the requesting client application is the client application authorized to access the requested service indicates that the requesting client application is not the client application authorized to access the requested service. Here, denying request may include that a communication link that has been established between the requesting client application and the secure gateway device is terminated and, thus, also the access to the secure network is terminated (e.g. together with an error message or the like).

However, denying access here may also include that a communication link that has been established between the requesting client application and the secure gateway device is maintained, wherein the fact that access to the requested service is not allowed may be indicated by an error message or the like. Further, in such cases, it is possible that the requesting client application may transmits another second request, now indicating access to another service provided by the secure network. Then, the method may further comprise
- receiving, at the secure gateway device, a further second request from the requesting client application to access a further requested service provided by secure network,
- verifying, by the secure gateway device, based on the access control data, whether the requesting client application is the client application authorized to access the further requested service;
- granting, by the secure gateway device, access to the further requested service, in the case the verifying whether the requesting client application is the client application authorized to access the further requested service indicates that the requesting client application is the client application authorized to access the further requested service.

Further, the present disclosure provides a method of controlling application-specific access to a secure network arranged within a communication environment, wherein the method is performed by a requesting client application external to the secure network.

The secure network comprises a secure gateway device providing access to the secure network for client applications external to the secure network.

Access control data identifies an authorized client application being authorized to access at least one service provided by the secure network and further identifying at least one service provided by the secure network to which service the authorized client application is authorized to access.

The method may comprise:
- transmitting a first request to the secure gateway device, the first request being an access request to access to the secure network and including information trustworthily identifying the requesting client application,
- transmitting a second request from to the secure gateway device, in the case access to the secure network is granted if verifying, by the secure gateway device on the basis of the information trustworthily identifying the requesting client application and the control access data, whether the requesting client application is the authorized client application indicates that the requesting client application is the authorized client application, wherein the second request is a request to access a requested service provided by secure network,
- accessing the requested service, in the case access to the requested service is granted if verifying, by the secure gateway device based on the control access data, whether the requesting client application is the client application authorized to access the requested service indicates that the requesting client application is the client application authorized to access the requested service.

The communication environment may include an access control server, which maintains the access control data, and wherein the access control data is provided from the access control server to the secure gateway device.

The access control data may be provided from the access control server to the secure gateway device in response to at least one of:
- a request from the secure gateway device ;
- the first request upon reception by the secure gateway device ;
- the first request upon transmission from the client application;
- an update process to update the access control data.

In the latter case, the update process may include that access control data already present at the secure gateway device are completely or partly replaced by new access control data provided from the access control server and/or are amended by additional access control data from the access control server.

An update process may be initiated according to a predefined update plan. For example, the secure gateway device may transmit a respectively timed control signal ("trigger") to the access control server. Also, it is possible that the access control server itself triggers an update process without request from the secure gateway device. A timely triggered update process may take place once at a specified time, daily, weekly, monthly, etc.

An update process may be initiated in response to an event. For example, an update process may be carried out in response to user instruction to do so at the access control server and/or the secure gateway device.

The access control server may be integrated into the secure network or external to the secure network.

The information trustworthily identifying the application may be a Transport Layer Security, TLS, certificate. More particularly, the information trustworthily identifying the application may be obtained from a mutually authenticated handshake according to TLS.

The verifying whether the requesting client application is the client application authorized to access the requested service may comprise analyzing a public key included in the information trustworthily identifying the application.

The verifying whether the requesting client application is the client application authorized to access the requested service may comprise comparing information derived from the public key with the access control data.

Analyzing the public key may comprise hashing the public key, wherein the verifying whether the requesting client application is the client application authorized to access the requested service is based on the hash value of the public key.

The least one service provided by the secure network may be hosted by at least one node in the secure network, wherein the second request may include an indication of one the at least one nodes hosting the requested service.

The second request may include an indication identifying a connection, preferably a physical connection to the requested service.

The verifying whether the requesting client application is the client application authorized to access the requested service may comprise comparing the information trustworthily identifying the requesting client application with the access control data.

The method may further comprise:
establishing, prior to receiving the first request, a position of trust between the application installed on the client device and the secure network yielding trustworthy identity information of the application and wherein the access control data is obtained from the trustworthy identity information.

Also, the present disclosure provides a computer program product for controlling application-specific access to a secure network arranged within a communication environment, wherein
- the secure network comprises a secure gateway device providing access to the secure network for client applications external to the secure network, and
- access control data identifies an authorized client application being authorized to access at least one service provided by the secure network and further identifying at least one service provided by the secure network to which service the authorized client application is authorized to access,
- the computer program product comprising computer code configured to, when executed by at least one computer device, cause at least one computer device to execute the method as disclosed above.

At least one computer device may be at least one of a secure gateway device, a control access server and a client application.

Moreover, the present disclosure provides a secure gateway device for application-specific access control to a secure network arranged within a communication environment, wherein
- the secure network comprises a secure gateway device providing access to the secure network for client applications external to the secure network, and
- access control data identifies an authorized client application being authorized to access at least one service provided by the secure network and further identifying at least one service provided by the secure network to which service the authorized client application is authorized to access.

The secure gateway device may adapted to:
- check whether a first request, being transmitted to the secure gateway device from a requesting client application external to the secure network and being an access request to access to the secure network, includes information trustworthily identifying the requesting client application;
- verify, in the case the checking step indicates that the first request includes information trustworthily identifying the requesting client application, on the basis of the access control data and the information trustworthily identifying, whether the requesting client application is the authorized client application;
- grant access to the secure network, in the case the verifying whether the requesting client application is the authorized client application indicates that the requesting client application is the authorized client application;
- in response to a second request from the requesting client application to access a requested service provided by secure network, verify, based on the access control data, whether the requesting client application is the client application authorized to access the requested service;
- grant access to the requested service, in the case the verifying whether the requesting client application is the client application authorized to access the requested service indicates that the requesting client application is the client application authorized to access the requested service.

The secure gateway device may be further adapted to deny access to the secure network, in the case the checking indicates that the first request does not include information trustworthily identifying the requesting client application. Here, denying request may include that no communication between the requesting client application and the secure gateway device is established at all or that a communication link that has been established between the requesting client application and the secure gateway device is terminated (e.g. together with an error message or the like).

The secure gateway device may be further adapted to deny access to the secure network, in the case the verifying whether the requesting client application is the authorized client application indicates that the requesting client application is not the authorized client application. Here, denying request may include that a communication link that has been established between the requesting client application and the secure gateway device is terminated (e.g. together with an error message or the like).

The secure gateway device may be adapted to deny access to the requested service, in the case the verifying whether the requesting client application is the client application authorized to access the requested service indicates that the requesting client application is not the client application authorized to access the requested service. Here, denying request may include that a communication link that has been established between the requesting client application and the secure gateway device is terminated and, thus, also the access to the secure network is terminated.

However, denying access here may also include that a communication link that has been established between the requesting client application and the secure gateway device is maintained, wherein the fact that access to the requested service is not allowed may be indicated by an error message or the like. Further, in such case, it is possible that the requesting client application may transmits another second request, now indicating access to another service provided by the secure network. Then the secure gateway device may adapted to:
- in response to a further second request from the requesting client application to access a further requested service provided by secure network, verify, based on the access control data, whether the requesting client application is the client application authorized to access the further requested service;
- grant access to the further requested service, in the case the verifying whether the requesting client application is the client application authorized to access the further requested service indicates that the requesting client application is the client application authorized to access the requested service.

The communication environment may include an access control server, which maintains the access control data, the secure gateway device being further adapted to at least one
- request the access control data from the access control server prior to the receiving of the first request from the client application;
- request the access control data from the access control server upon the receiving of the first request from the client application;
- request the access control data from the access control server in response to an update process to update the access control data.

In the latter case, the update process may include that access control data already present at the secure gateway device are completely or partly replaced by new access control data provided from the access control server and/or are amended by additional access control data from the access control server.

An update process may be initiated according to a predefined update plan. For example, the secure gateway device may transmit a respectively timed control signal ("trigger") to the access control server. Also, it is possible that the access control server itself triggers an update process without request from the secure gateway device. A timely triggered update process may take place once at a specified time, daily, weekly, monthly, etc.

An update process may be initiated in response to an event. For example, an update process may be carried out in response to user instruction to do so at the access control server and/or the secure gateway device.

Also, the present disclosure provide a client application for controlling application-specific access to a secure network arranged within a communication environment including an access control server, wherein
- the secure network comprises a secure gateway device providing access to the secure network for client applications external to the secure network, and
- access control data identifying an authorized client application being authorized to access at least one service provided by the secure network and further identifying at least one service provided by the secure network to which service the authorized client application is authorized to access.

The client application may be a client application external to the secure network, and may be adapted to
- transmit a first request to the secure gateway device, the first request being an access request to access to the secure network and including information trustworthily identifying the requesting client application;
- transmit a second request to the secure gateway device, in the case access to the secure network is granted if verifying, by the secure gateway device on the basis of the information trustworthily identifying the requesting client application and the control access data, whether the requesting client application is the authorized client application indicates that the requesting client application is the authorized client application, wherein the second request is a request to access a requested service provided by secure network;
- access the requested service, in the case access to the requested service is granted if verifying, by the secure gateway device based on the access control data, whether the requesting client application is the client application authorized to access the requested service indicates that the requesting client application is the client application authorized to access the requested service.

### Brief description of the drawings

The description of examples following hereafter will be given with reference to the attached drawings, which show:
- Fig. 1: a schematic illustration of an exemplary communication environment comprising an access control server external into a secure network;
- Fig. 2: a schematic illustration of an exemplary communication environment comprising an access control server integrated to a secure network;

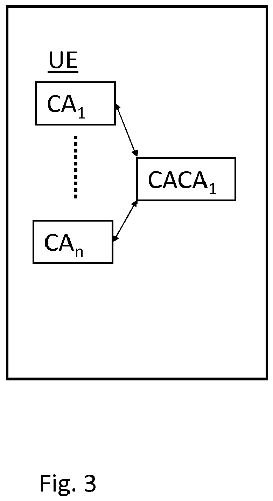

- Fig. 3: a schematic illustration of an exemplary user equipment comprising client applications and a client access control application being associated to the client applications,
- Fig. 4: is a flow-diagram of an exemplary process of carrying out a method according to the present disclosure,
- Fig. 5: is a flow-diagram of a further exemplary process of carrying out a method according to the present disclosure.

### Detailed description

Various aspects of the present disclosure will be described below by referring to the drawings. Features with similar properties or functions, which are shown in multiple figures, are referred to by the same reference numerals and will be explained upon their first mention.

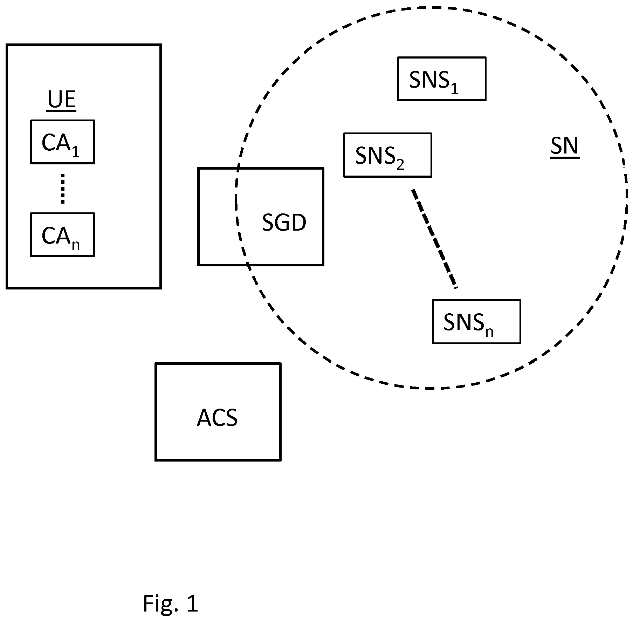

Fig. 1 illustrates an exemplary scenario comprising a communication environment CE, via and/or in which communication devices may communicate with each other.

Fig. 1 illustrates, as exemplary communication devices, a user equipment UE and a secure network SN. However, there may be more than one user equipment and more than one secure network as well as one or more other communication devices, particularly unsecure devices.

A communication device may be arranged within the communication environment CE, e.g. as integral part of the communication environment CE providing (also) communication functions of the communication environment CE.

A communication device may be associated to communication environment CE, e.g. being communicatively (only) coupled to the communication environment CE.

A communication device may (be) selectively connect(ed) to the communication environment CE, e.g. only in the case the communication device wishes to establish communication with another communication device or vice versa.

In the following, for the sake of simplification, it will the referred to examples where communication devices are arranged within the communication environment CE. However, such references correspondingly apply to any other manner communication devices are communicating via the communication environment CE.

The communication environment CE is a means for communicating any form of data including user data (e.g. voice, audio, video, content data) and control data (e.g. for establishing communication between at least two communication devices, control of communication as such, control of communication devices) between communication devices.

The communication environment CE may include, e.g. at least one of the Internet, one or more mobile/cellular telephone network, any other form of computer based communication network, etc.

The user equipment UE may comprise, e.g., a stationary or portable computer, a mobile or smartphone, a watch, a media player, a media providing device, a communication router, a server, a network gateway or combinations thereof and/or or functions of one or more of such devices. In the case, the user equipment UE comprises a function of such a device, the function can be provided in form of software and/or hardware.

The user equipment UE comprises at least one client application CAi, ..., CAₙ (in the following also designated as CA). A client application CA can be in the form of hardware, software or a combination thereof. A client application CA may be correspond with one or more of the previously mentioned examples of devices or functions that the user equipment UE may comprise. Irrespective of whether and which hardware and/or software forms a client application CA, from the perspective of user equipment UE and its user, respectively, as well as from the perspective of another communication device in the communication environment CE, a client application CA generally looks like an application. Therefore, the term "application" is used here.

For example, a client application CA may be a data processing device and/or provide data processing. A data processing client application may obtain data via the communication environment CE from any other communication device in the communication environment CE, for example the secure network, and/or provide data (even if not being previously processed by the client application CA as set forth in the following) via the communication environment CE to any other communication device in the communication environment CE, for example the secure network. Data, taken alone or in combination with data available at the user equipment UE, may be processed by the data processing client application and outputted to the user equipment UE, for example for display to a user, and/or to any other communication device in the communication environment CE, for example the secure network. A data processing client application may have general-purpose data processing capabilities or, for example, be more specialized to, e.g., process calendar data, personal information/data (e.g. address information).

A client application CA may be a video/audio player and/or provide video/audio playing. A video/audio client application may obtain video/audio via the communication environment CE from any other communication device in the communication environment CE, for example the secure network, and/or provide video/audio via the communication environment CE to any other communication device in the communication environment CE, for example the secure network. Video/audio, taken alone or in combination with data available at the user equipment UE, may be reproduced by the video/audio client application and outputted to and/or by the user equipment UE, for example for via a display, monitor and the like and a loud speaker, respectively, to a user.

A client application CA may be a browser and/or provide browser functions. A browser client application may access web-based services, webpages, which may be provided in conventional form ("like Internet usage at home") or may be provided by another communication device in the communication environment CE, e.g. by the secure network.

A client application CA may be an e-mailer and/or provide e-mail functionality. An e-mail client application may access an e-mail server in communication environment CE, e.g., in the secure network, and be operated in connection with such a server.

Further examples of client application CA include applications for exchanging sensitive information to and/or from one more services provided by the secure network, e.g. healthcare data, intellectual property related documents, contracts, crime related data, financial data, etc.

Client applications CA in the above sense can be also considered as user client applications CA.

A user client application CA as such may be adapted to have implemented the teachings of the present disclosure. Such examples may require that a user client application CA is to be designed/provided in that way.

It may be possible that a user application already provided at the user equipment UE (e.g. already installed software/hardware of user equipment UE) is not adapted to have implemented the teachings of the present disclosure, but cannot be enhanced (e.g. due to technical reasons and/or due to high (financial) efforts necessary to do so) so that the teachings of the present disclosure are implemented.

For such cases, the user equipment UE may comprises a client access control application CACA.

Generally, a client access control application CACA can be considered as "user equipment UE gateway" to/from the communication environment CE and other communication devices, respectively, and particularly with respect to the secure network and communications therewith. A client access control application CACA implements (at least partially) the teachings of the present disclosure with respect to user equipment UE and its user client applications CAi, ..., CAₙ not having implemented the teachings of the present disclosure.

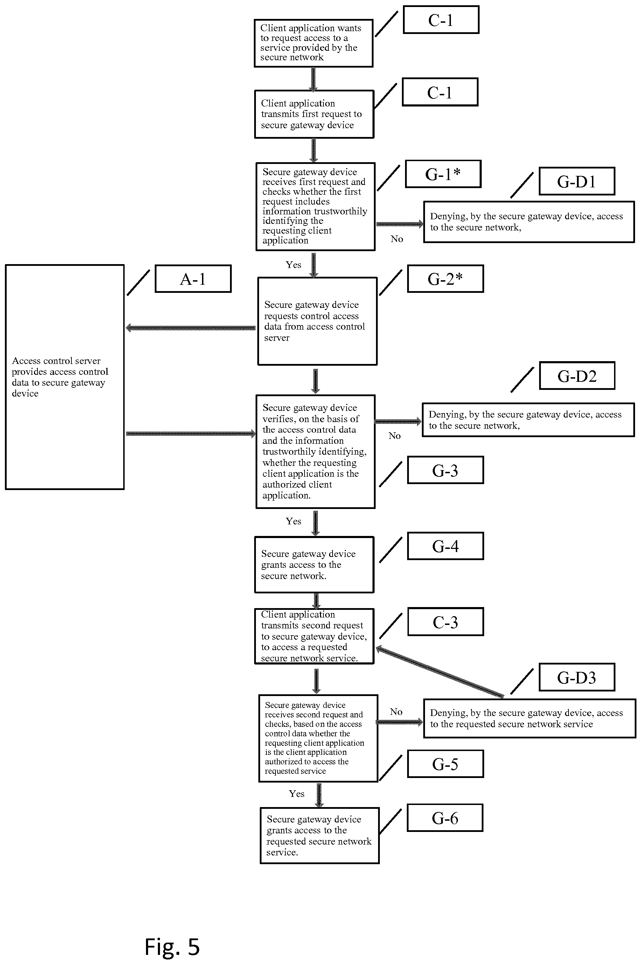

In the case, a client access control application CACA is an application separate from other user client applications CA, then a single client control application CACA (see Fig. 5) may be sufficient to support one or more other client applications CA of the user equipment UE in communicating with the secure network and, particularly, accessing the secure network and accessing one or more services provided by the secure network.

In any case, it is assumed that a user client application CA can use the functionality of a client access control application CACA, either an integral part of the user client application CA or by means of a client control application being associated to the user client application CA. Starting therefrom, the following will generally refer to client applications CA, which are envisaged to cover, e.g., user client applications CA incorporating the teachings of the present disclosure and user client applications CA having an associated client access control application CACA that incorporates the teachings of the present disclosure.

In further examples, a user client application CA, which as such does not integrate the teachings of the present disclosure, may be amended (e.g. in form of a software add-on or plug-in) by functionalities of a client access control application or an "own" client access control application only associated to and/or integrated into the user client appl. For example, in the case of more than one user client application CA, where the teachings of the present disclosure are not integrated, each user client application may have each own associated client access control application.

In the case of more than one secure network, it is possible to use more than one client access control application, namely a client access control application for each secure network. In case of a user client application integrating the teachings of the present disclosure, the user client application may include, for each secure network, respective client access control functionalities.

A secure network particularly means a network access to which is limited to certain communication devices, user equipment UE and client applications CA. Access limitation may be accomplished by password-based authentication, smartcard-based authentication, key-based encryption, etc.

The secure network has a secure gateway device SGD, which acts as the entrance/exit gate to/from the secure network.

The secure network comprises at least one service that may be provided by the secure network (in the following short secure network service). A secure network service may be provided, upon request, internal within the secure network, but also to communication devices, user equipment UE and client applications CA external to the secure network via the secure gateway device SGD. A secure network service may be in the form of hardware, software or a combination thereof. Irrespective of whether and which hardware and/or software forms a secure network service, from the perspective of a service requester a secure network service generally looks like a service providing source. Therefore, the term "service" is used here.

Generally, a service may be rather simple with respect to security. Examples for such services include data provider providing documents, music, video etc.

However, secure networks may provide services being more sensitive with respect to security. Examples for such services include banking services, e-commerce, healthcare related services, etc. In such cases, access to a service is generally not limited to data access, but also includes processing of data, initiation of processes (e.g. money transfer, evaluation of medical data, data collection), etc.

A secure network service may be a data provider and/or provide data. For example, a data providing secure network service may be a data provider, a service provider, a file server, a source providing video/audio downloads, documents, image data.

A secure network service may be a web page server and/or provide at least one web page, an electronic calendar, an electronic address book, personal information, etc.

A secure network service may be some backend application handling transactions for example in the area of financial services or for collecting health related information of an individual.

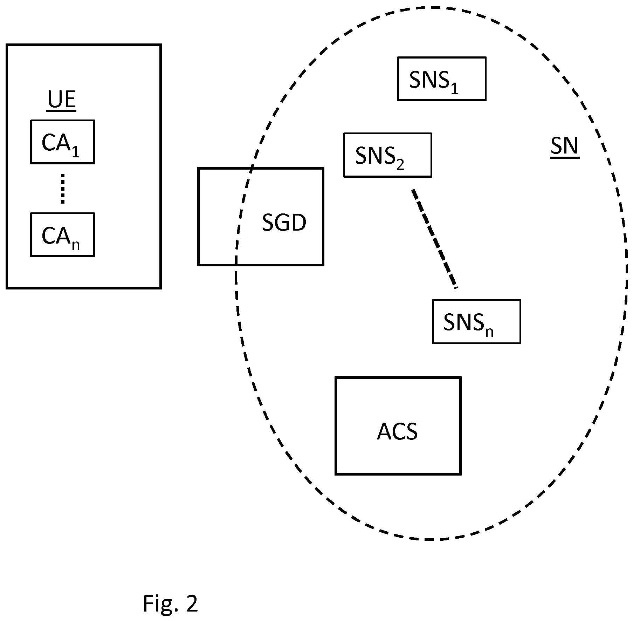

The communication environment CE comprises an access control server ACS. The access control server ACS may be, as illustrated in Fig. 1, external to the secure network SN or, as illustrated in Fig. 2, integrated into the secure network SN.

The access control server ACS comprises access control data identifying one or more client applications CA being authorized to access one or more of the secure network services.

The access control data may further identify one or more secure network services that is/are allowed to be accessed by a client application CA identified as client applications CA being authorized to access secure network service(s).

Also, the access control data may identify one or more secure network services that is/are not allowed and/or possible to be accessed by a client application CA even if being identified as client applications CA being authorized to access secure network service(s). This can be used, for example, in the case of services actually not provided by the secure network SN at all; services that are provided by the secure network SN, but shall be used only by specific and/or predefined client application CA and/or communication devices (user equipment UE); services that are provided by the secure network SN, but shall be not used only by specific and/or predefined client application CA and/or communication devices (user equipment UE); services that are provided by the secure network SN, but shall be used only during specific and/or predefined periods of time (e.g. during working hours, working days, weekends, etc.).

The access control server ACS maintains access control data and may provide access control data to the secure gateway device SGD.

Access control data may be provided from the access control server ACS to the gateway device, for example, upon request from the gateway device and/or in response to communication to communication (e.g. a so-called first request) between a client application CA and user equipment UE, respectively, and the secure gateway device SGD.

However, irrespective of such specific communication situations, access control data may be provided at predefined times (e.g. on an hourly, daily, weekly, ... basis) and/or at predefined time intervals (e.g. hour, day, week, ... ) and/or in the case access control data is updated or modified at the access control server ACS and/or upon the secure gateway device SGD is (re)started. Also, specific events may trigger that access control data may be provided for the secure gateway device SGD.

Further, access control data may be provided in part or step wise. For example, a first part(s) of access control data indicating that a client application CA is a client application CA authorized to access the secure network SN and a second part(s) of access control data indicating that a client application CA is a client application CA authorized to access a service provided by the secure network SN may be provided separately, e.g. at different times (e.g. the first part in connection with the so-called first request and the second part in connection with the so-called second request).

Access control data may be provided for a specific client application CA and/or a specific user equipment UE or for a plurality of client applications CA and/or a plurality of user equipment UE. In the latter case, access control data may be provided, e.g., in form of a list, table, spreadsheet, structured data, etc.

Access control data may include, e.g., at least one of a public key and/or a hashed version of a public key ("fingerprint"), information on a certificate of a client application CA being authorized to access the secure network SN.

In order for a client application to be or become a client application CA authorized to the secure network SN, a position of trust between the client application CA and the secure network SN may be established so that the secure gateway device SGD may trustworthily determine that a client application CA is an authorized client application.

To this end, as trustworthy information, for example, a certificate may be used. The certificate may be associated to the client application CA (e.g. as integral part thereof or data "loaded" into the client application CA or data that is present in the user equipment UE and can be accessed by the client application CA). The information actually used by the secure gateway device SGD to determine whether a client application CA is an authorized client application CA or not, the certificate as such and/or information derived from the certificate may be used. In the latter case, for example, in the case the certificate associated to the client application CA includes a public key, the public key or a modified version of the public key may be used. Modification of information derived from a certificate may include hashing, encoding, scrambling, etc.

Also, the secure gateway device SGD may use different information to trustworthily identify a client application CA. For example, a step-wise approach may be used, wherein, first it is checked whether the client application CA provides a certificate of which the secure gateway knows that it is the certificate associated to the client application CA and, then, it is checked whether data derived from the certificate is data that an authorized client application CA must provide if it is an authorized client application CA.

Information trustworthily indicating a client application CA is a client application CA authorized to access the secure network SN may be communicated from a client application CA to the secure gateway device SGD in form of a network access request (also referred to a first request, e.g., in the claims).

Knowledge that trustworthy information (e.g. certificate) is associated to the client application CA may be maintained/included in access control data identifying the client application CA as authorized client application CA.

For example, the access control data identifying the client application CA as authorized client application CA may include data identifying the certificate of the client application CA and/or information derived from the certificate. In the latter case, for example, in the case the certificate associated to the client application CA includes a public key, the public key or a modified version of the public key may be included in the access control data. Modification of information derived from a certificate may include hashing, encoding, scrambling, ...

In order for a client application CA to be or become a client application CA authorized to access a service provided by the secure network SN, information indicating that the client application CA is allowed to access a secure network's service may be used. Such information may be maintained in the access control server ACS and, particularly, as part of access control data associated to the client application CA.

For example, access control data associated to an authorized client application CA may include data indicating that the client application CA is authorized to access one or more services provided by the secure network SN. Also, access control data associated to an authorized client application CA may include data indicating that the client application CA is not authorized to access one or more services provided by the secure network SN.

A client application CA seeking to access a service provided by the secure network SN may, e.g., communicate a service access request (also referred as second request, e.g., in the claims) indicating hardware and/or software components of the secure network SN. For example, a service access request may indicate a protocol version, name and/or IP address of an internal host of the secure network SN, a (TCP) port.

Information in a service access request indicating a requested service may be also included in the access control data. For example, access control data may include the same information that is used in the service access request (second request) to indicate which service is requested to be accessed (see above) and/or data derived therefrom.

Upon receipt of a service access request (second request), the secure gateway device SGD checks, on the basis of the access control data, whether the requesting client application CA, which is already identified as client application CA authorized to access the secure network SN, is also authorized to access the requested service(s).

Access control data used to determine whether a requesting client application CA is authorized to access a requested service provided by the secure network SN may be provided from the access control server ACS to the secure gateway device SGD together with access control data used to determine whether a client application CA is authorized to access the secure network SN or separated therefrom (as already set forth above).

In the latter case, access control data used to determine whether a requesting client application CA is authorized to access a requested secure network service may be provided from the access control server ACS to the secure gateway device SGD, for example, upon request from the gateway device and/or in response to communication to communication (e.g. a so-called second request) between a client application CA and user equipment UE, respectively, and the secure gateway device SGD.

Also, access control data may be provided at predefined times (e.g. on an hourly, daily, weekly, ... basis) and/or at predefined time intervals (e.g. hour, day, week, ... ), as already described above.

If, in response to a first request of a client application CA to access the secure network SN, the secure gateway device SGD determines that the requesting client application is not authorized to access the secure network SN, the secure gateway device SGD denies access. To this end, for example, the secure gateway device SGD may simply reject any further data exchange with the client application CA so that no communication link between secure gateway device SGD and client application CA is established at all. Further, in the case transmitting and receiving the first request requires a communication link to be established between the secure network device SGD and the client application CA, then the communication link between the client application CA and the secure gateway device SGD may be terminated or closed, e.g., together with a respective error message.

If, in response to a second request of a client application CA to access a service provided by the secure network SN, the secure gateway device SGD determines that the requesting client application CA is not authorized to access a secure network service, the communication link between the client application CA and the secure gateway device SGD may be terminated or closed, e.g., together with a respective error message. In other examples, where the requesting client application CA is not authorized to access a secure network service, the communication link between the requesting client application CA and the secure gateway device SGD may be maintained, so that, for example, the requesting client application CA may transmit another, different second request indicating a request to access another secure network service than the one access to which requested before. In other words, a client application CA already determined to access the secure network may be allowed to transmit more than one second request so that, in the case access to a service is not allowed, access to another service can be requested without the need of repeating the authorization to the secure network again.

However, if a requesting client application CA is authorized to access the secure network SN and authorized to access a requested service provided by the secure network SN, the secure gateway device SGD grants access to the requested service. For example, the secure gateway device SGD may open a socket allowing access to the requested service, e.g., a socket connection to a specified name and/or IP address of an internal host of the secure network SN, a (TCP) port.

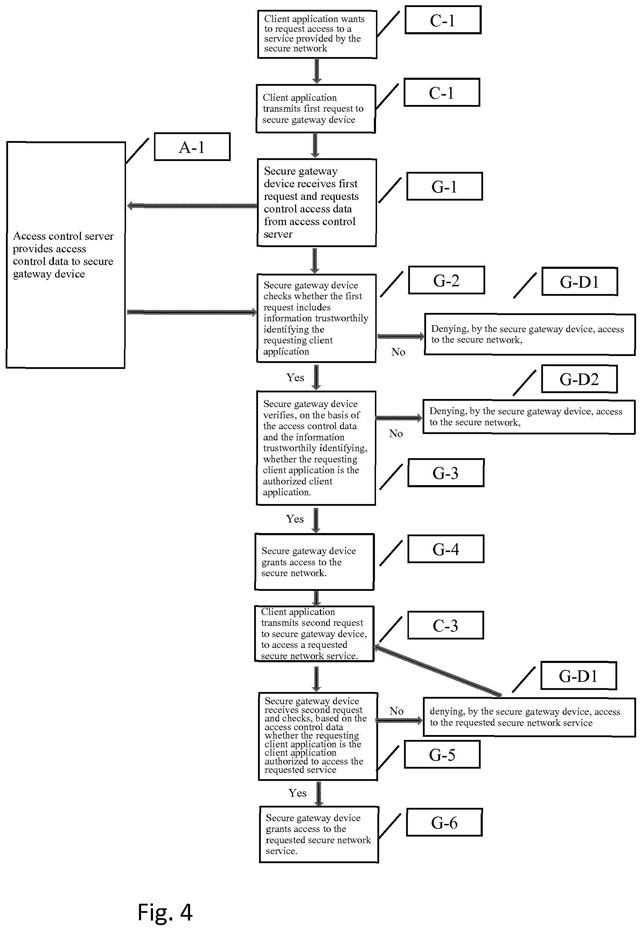

With reference to Figs. 4 and 5 process for carrying out methods according to present disclosure are described, wherein reference numerals with a "C" indicate steps carried out by a client application CA or a client access control application CACA, a "G" indicate steps carried out by a secure gateway device SGD, an "A" indicate steps carried out by an access control server ACS.

As already noted above, it is assumed that the term client application CA covers a client application CA incorporating the teachings of the present disclosure (e.g. by having originally integrated respective functionalities or in enhanced by a respective functionalities) and a client application CA having associated a client access control application CACA, that may support that client application CA or several client applications CA).

Fig. 6 and 7 relate to examples of the present disclosure, where access control data as whole for a requesting client application CA are provided from an access control server ACS to a secure gateway device SGD. In other examples of the present disclosure, access control data for a requesting client application CA are provided step-wise from an access control server ACS to a secure gateway device SGD.

According to Figs. 6 and 7, a secure gateway device SGD receives a first request from a client application CA requesting access to a secure network SN and, then, is provided with access control data from an access control server ACS, followed by verifying whether trustworthy information in the first request indicates that the requesting client application CA is authorized to access the secure network SN.

In other examples, a secure gateway device SGD receives a first request from a client application CA requesting access to a secure network SN, then, checks whether the first request includes trustworthy information, and, if this is the case, is provided with access control data from an access control server ACS, followed by verifying whether trustworthy information in the first request indicates that the requesting client application CA is authorized to access the secure network SN.

As already noted above, although Figs. 6 and 7 show that access control data is provided in connection with a first request from a client application CA to a secure gateway device SGD, it is possible that access control data is provided independently of any first request, but "front-up" so that the secure gateway device SGD already has access control data before receipt of a first request and is "prepared" to handle first requests.

In the exemplary process of Fig. 6, a client application CA, which is no part of a secure network SN, wants to access the secure network SN (step C-1). To this end, the requesting client application CA communicates a respective request (referred to a first request or network access request) to a secure gateway device SGD (step C-2).

The secure gateway device SGD receives the first request and, in response thereto, requests the data from an access control server ACS (step G-1).

Upon receipt of the control access the data request from the secure gateway device SGD, the access control server ACS provides access control data to the secure gateway device SGD (step A-1).

The access control data provided in step A-1 may include access control data only being related to the requesting client application CA, which may be identified by the secure gateway device SGD on the basis of, e.g., an identification of a user equipment UE on which the client application CA is carried out, an identification of the client application CA as such.

In other examples, the access control data provided in step A-1 may include access control data being related to a plurality and/or group of client application CAs generally being authorized to access the secure network SN, the requesting client application CA being part of the plurality/a group of generally authorized client application CAs. In such cases, it is not necessary to identify, for the access control server ACS, the requesting client application CA as such.

Having received the access control data from the access control server ACS, the secure gateway device SGD checks whether the first request includes information trustworthily identifying the requesting client application CA (step G-2).

For example, the requesting client application CA may send a client certificate (e.g. TLS client certificate) to the secure gateway device SGD. The certificate may be transmitted preemptively when the requesting client application CA establishes a connection to the secure gateway device SGD or secure gateway device SGD may request the transmission of the certificate.

The checking step G-2 may include the deriving information from the first request, which information trustworthily identifies the requesting client application CA. For example, in the case of a client certificate, the checking step G-2 may include deriving a (public) key from the certificate, for example, by removing attributes of the certificate and only retrieving the (public) key.

In the case information trustworthily identifying the requesting client application CA is information derived from the first request, the derived information may be further processed. For example, in the case of a client certificate, a (public) key derived from the certificate may be hashed to obtain a "fingerprint" that is considered information trustworthily identifying the requesting client application CA.

If, in step G-2, the secure gateway device SGD determines that no information trustworthily identifying the requesting client application CA has been received, the secure gateway device SGD denies access to the secure network SN (step G-D1).

If, in step G-2, the secure gateway device SGD determines that information trustworthily identifying the requesting client application CA has been received, the process proceeds to step G-3.

In step G-3, the secure gateway device SGD verifies whether the requesting client application CA is a client application CA authorized to access the secure network SN. The verification is carried out on the basis of the information trustworthily identifying the requesting client application CA and the access control data.

For example, in the case of a client certificate, the secure gateway device SGD may check whether the access control data includes the same client certificate or information indicating that the client certificate is the client certificate of a client application CA authorized to access the secure network SN, or the (public) key corresponding with a (public) key derived from the client certificate received by the secure gateway device SGD or information indicating that the a (public) key derived from the client certificate received by the secure gateway device SGD is the (public) key of a client application CA authorized to access the secure network SN, or data corresponding with data resulting from processed information derived from the certificate ("fingerprint") or information indicating that processed information derived from the certificate ("fingerprint") is the processed information of a client application CA authorized to access the secure network SN, or any combination thereof.

If the result of the verification of step G-3 is that the requesting client application CA is not authorized to access the secure network SN, the secure gateway device SGD denies access to the secure network SN (step G-D2).

If the result of the verification of step G-3 is that the requesting client application CA is authorized to access the secure network SN, the process proceeds to step G-4.

In step G-4, the secure gateway device SGD grants network access to the requesting client application CA. Before step G-4, the requesting client application CA only communicated the first request to the secure gateway device SGD.

This can be compared with a telephone trying to establish a telephone connection with a telephone network. If the telephone system rejects the request of the telephone (e.g. because the telephone uses only LTE and the telephone system uses only GSM or the telephone is not allowed to roam in the telephone system), the telephone line goes "simply dead", an error message is output, etc. However, if the telephone system accepts the request of the telephone, a connection between telephone and telephone system is established for transmitting information indicating, e.g., which other telephone should be called. Having established such a connection, it can be said that the telephone system has granted access for the telephone.

This is comparable with the situation of step G-4. Here, a connection between the requesting client application CA and the secure gateway device SGD is established or maintained via which the requesting client application CA can inform the secure gateway device SGD on one or more services of the secure network SN the requesting client wants to access.

In step C-3, the requesting client application CA transmits a second request to the secure gateway device SGD, the second request informing the secure gateway device SGD that the requesting client application CA wishes to access a service provided by the secure network SN. The second request may be sent from the requesting client application CA to the secure gateway device SGD, e.g., upon maintenance of the communication connection to the secure gateway device SGD, upon request from the secure gateway device SGD.

In step G-5, the secure gateway device SGD, having received the second request, checks whether the requesting client application CA is a client application CA authorized to access the requested service from the secure network SN. For example, an authentication process may be carried out to check whether the access control data includes information indicating that client application CA is allowed to access the secure network service specified in the second request. To this end, the information trustworthily identifying the requesting client application CA may be used as "ID" for the requesting client application CA.

If the result of step G-5 is that the requesting client application CA is not authorized to access the requested service of the secure network SN, the secure gateway device SGD denies access to the requested secure network service (step G-D3).

Here, it is possible that access to the secure network SN is completely terminated.

However, in further examples, as indicated by the arrow from step G-D3 to back step C-3, it is possible that the requesting client application CA transmits a further second request to the secure gateway device SGD, the further second request indicating a request to access another, different secure network service. Then, step G-5 is carried again, but now on the basis of the further second request.

If the result of step G-5 being carried out for the further second request is that the requesting client application CA is not authorized to access the further requested service of the secure network SN, the secure gateway device SGD denies access to the further requested secure network service (step G-D3).

Then, the process may be referred back to step C-3 so that another further second request may be transmitted to the secure gateway device SGD. In this manner, the requesting client application may request access to more than two services. However, the number of access attempts may be limited, for example, in that only a predefined number of second requests may be transmitted, wherein, if the number is exceeded, access to the secure network SN is completely terminated.

If the result of step G-5 is that the requesting client application CA is authorized to access the requested service of the secure network SN, the process proceeds to step G-6. The same applies to any further second request, if any.

In step G-6, the secure gateway device SGD allows the requesting client application CA to access the secure network service access to which the client application CA has requested. The secure network service to which access is requested is indicated by the second request.

For example, the second request may include data specifying software and/or hardware to be accessed. In some examples, the second request may indicate the name (e.g. hostname) and/or IP address of the respective service providing internal host of the secure network SN and/or a (TCP) port via which the requested service can be provided and access, respectively. On the basis of such information, the secure gateway device SGD may, e.g., opens a socket connection to the specified host and/or port. Upon establishment of the socket connection, the secure gateway device SGD establishes a connection between the requesting client application CA and the requested service, e.g., by bridging the connection between the requesting client application CA and the secure gateway device SGD and the (e.g. socket) connection between secure gateway device SGD and the specified host and port, respectively.

Upon completion of accessing the requested secure network service, the process may return to step C-3 so that, without loosing access to the secure network and the need to request network access again, access to another secure network service can be requested.

Otherwise, access to the secure network service may be terminated by at least one of the requesting client application CA, the secure gateway device SGD and/or the secure network SN.

The process of Fig. 7 can be compared with the process of Fig. 6 apart from the following.

According to Fig. 6, the secure gateway device SGD receives the first request and is provided access control data (step G-1) and verifies whether the requesting client application CA is a client application CA authorized to access the secure network SN (step G-2).

In the process of Fig. 7, the secure gateway device SGD receives the first request and checks whether the first request includes information trustworthily identifying the requesting client application CA (step G-1*).

If, in step G-1*, the secure gateway device SGD determines that no information trustworthily identifying the requesting client application CA has been received, the secure gateway device SGD denies access to the secure network SN (step G-D1).

If, in step G-1*, the secure gateway device SGD determines that information trustworthily identifying the requesting client application CA has been received, the process proceeds to step G-2*, where the secure gateway device SGD requests control access the data from an access control server ACS.

The other steps of Fig. 7 correspond with the respective steps of Fig. 6.

## Claims

1. A method of controlling application-specific access to a secure network (SN) arranged within a communication environment (CE), wherein
- the secure network (SN) comprises a secure gateway device (SGD) providing access to the secure network (SN) for client applications external to the secure network (SN), and
- access control data identifies an authorized client application (CA) being authorized to access at least one service provided by the secure network (SN) and further identifying at least one service provided by the secure network (SN) to which service the authorized client application (CA) is authorized to access,
the method comprising:
- receiving a first request at the secure gateway device (SGD) from a requesting client application (CA) external to the secure network (SN), the first request being an access request to access to the secure network (SN);
- checking, by the secure gateway device (SGD), whether the first request includes information trustworthily identifying the requesting client application (CA);
- in the case the checking indicates that the first request includes information trustworthily identifying the requesting client application (CA), verifying, by the secure gateway device (SGD), on the basis of the access control data and the information trustworthily identifying, whether the requesting client application (CA) is the authorized client application (CA);
- granting, by the secure gateway device (SGD), access to the secure network (SN), in the case the verifying whether the requesting client application (CA) is the authorized client application (CA) indicates that the requesting client application (CA) is the authorized client application (CA);
- receiving, at the secure gateway device (SGD), a second request from the requesting client application (CA) to access a requested service provided by secure network (SN),
- verifying, by the secure gateway device (SGD), based on the access control data, whether the requesting client application (CA) is the client application (CA) authorized to access the requested service;
- granting, by the secure gateway device (SGD), access to the requested service, in the case the verifying whether the requesting client application (CA) is the client application (CA) authorized to access the requested service indicates that the requesting client application (CA) is the client application (CA) authorized to access the requested service.

2. Method of claim 1, further comprising at least one of the following:
- denying, by the secure gateway device (SGD), access to the secure network (SN), in the case the checking indicates that the first request does not include information trustworthily identifying the requesting client application (CA);
- denying, by the secure gateway device (SGD), access to the secure network (SN), in the case the verifying whether the requesting client application (CA) is the authorized client application (CA) indicates that the requesting client application (CA) is not the authorized client application (CA);
- denying, by the secure gateway device (SGD), access to the requested service, in the case the verifying whether the requesting client application (CA) is the client application (CA) authorized to access the requested service indicates that the requesting client application (CA) is not the client application (CA) authorized to access the requested service.

3. A method of controlling application-specific access to a secure network (SN) arranged within a communication environment (CE), wherein
- the secure network (SN) comprises a secure gateway device (SGD) providing access to the secure network (SN) for client applications (CA) external to the secure network (SN), and
- access control data identifies an authorized client application (CA) being authorized to access at least one service provided by the secure network (SN) and further identifying at least one service provided by the secure network (SN) to which service the authorized client application (CA) is authorized to access,
- the method being performed by a requesting client application (CA) external to the secure network (SN),
- the method comprising:
- transmitting a first request to the secure gateway device (SGD), the first request being an access request to access to the secure network (SN) and including information trustworthily identifying the requesting client application (CA),
- transmitting a second request from to the secure gateway device (SGD), in the case access to the secure network (SN) is granted if verifying, by the secure gateway device (SGD) on the basis of the information trustworthily identifying the requesting client application (CA) and the control access data, whether the requesting client application (CA) is the authorized client application (CA) indicates that the requesting client application (CA) is the authorized client application (CA), wherein the second request is a request to access a requested service provided by secure network (SN),
- accessing the requested service, in the case access to the requested service is granted if verifying, by the secure gateway device (SGD) based on the control access data, whether the requesting client application (CA) is the client application (CA) authorized to access the requested service indicates that the requesting client application (CA) is the client application (CA) authorized to access the requested service.

4. Method of any of the preceding claims, wherein the communication environment (CE) includes an access control server (ACS), which maintains the access control data, and wherein the access control data is provided from the access control server (ACS) to the secure gateway device (SGD).

5. Method of claim 4, wherein the access control data is provided from the access control server (ACS) to the secure gateway device (SGD) in response at least one of:
- a request from the secure gateway device (SGD);
- the first request upon reception by the secure gateway device (SGD);
- the first request upon transmission from the client application (CA);
- an update process to update the access control data.

6. Method of claim 4 or 5, wherein the access control server (ACS) is either integrated into the secure network (SN) or external to the secure network (SN).

7. Method of any of the preceding claims, wherein the information trustworthily identifying the application is a Transport Layer Security, TLS, certificate.

8. Method of any of the preceding claims, wherein the verifying whether the requesting client application (CA) is the client application (CA) authorized to access the requested service comprises analyzing a public key included in the information trustworthily identifying the application.

9. Method of the claim 8, wherein the verifying whether the requesting client application (CA) is the client application (CA) authorized to access the requested service comprises comparing information derived from the public key with the access control data.

10. Method of claim 8 or 9, wherein analyzing the public key comprises hashing the public key, wherein the verifying whether the requesting client application (CA) is the client application (CA) authorized to access the requested service is based on the hash value of the public key.

11. Method of any of the preceding claims, wherein
- the least one service provided by the secure network (SN) is hosted by at least one node in the secure network (SN), and
- the second request includes an indication of one the at least one nodes hosting the requested service.

12. Method of any of the preceding claims, wherein the second request includes an indication identifying a connection, preferably a physical connection to the requested service.

13. Method of any of the preceding claims, wherein the verifying whether the requesting client application (CA) is the client application (CA) authorized to access the requested service comprises comparing the information trustworthily identifying the requesting client application (CA) with the access control data.

14. Method of any of the preceding claims, further comprising:
establishing, prior to receiving the first request, a position of trust between the application installed on the client device and the secure network (SN) yielding trustworthy identity information of the application and wherein the access control data is obtained from the trustworthy identity information.

15. Computer program product for controlling application-specific access to a secure network (SN) arranged within a communication environment (CE), wherein
- the secure network (SN) comprises a secure gateway device (SGD) providing access to the secure network (SN) for client applications (CA) external to the secure network (SN), and
- access control data identifies an authorized client application (CA) being authorized to access at least one service provided by the secure network (SN) and further identifying at least one service provided by the secure network (SN) to which service the authorized client application (CA) is authorized to access,
- the computer program product comprising computer code configured to, when executed by at least one computer device, cause the at least one computer device to execute the method of any of the preceding claims.

16. Computer program product of the preceding claim, wherein the at least one computer device is at least one of a secure gateway device (SGD), a control access server and a client application (CA).

17. Secure gateway device (SGD) for application-specific access control to a secure network (SN) arranged within a communication environment (CE), wherein
- the secure network (SN) comprises a secure gateway device (SGD) providing access to the secure network (SN) for client applications (CA) external to the secure network (SN), and
- access control data identifies an authorized client application (CA) being authorized to access at least one service provided by the secure network (SN) and further identifying at least one service provided by the secure network (SN) to which service the authorized client application (CA) is authorized to access,
- the secure gateway device (SGD) being adapted to:
- check whether a first request, being transmitted to the secure gateway device (SGD) from a requesting client application (CA) external to the secure network (SN) and being an access request to access to the secure network (SN), includes information trustworthily identifying the requesting client application (CA);
- verify, in the case the checking step indicates that the first request includes information trustworthily identifying the requesting client application (CA), on the basis of the access control data and the information trustworthily identifying, whether the requesting client application (CA) is the authorized client application (CA);
- grant access to the secure network (SN), in the case the verifying whether the requesting client application (CA) is the authorized client application (CA) indicates that the requesting client application (CA) is the authorized client application (CA);
- in response to a second request from the requesting client application (CA) to access a requested service provided by secure network (SN), verify, based on the access control data, whether the requesting client application (CA) is the client application (CA) authorized to access the requested service;
- grant access to the requested service, in the case the verifying whether the requesting client application (CA) is the client application (CA) authorized to access the requested service indicates that the requesting client application (CA) is the client application (CA) authorized to access the requested service.

18. Secure gateway device (SGD) of claim 17, being further adapted to at least one:
- deny access to the secure network (SN), in the case the checking indicates that the first request does not include information trustworthily identifying the requesting client application (CA),
- deny access to the secure network (SN), in the case the verifying whether the requesting client application (CA) is the authorized client application (CA) indicates that the requesting client application (CA) is not the authorized client application (CA),
- deny access to the requested service, in the case the verifying whether the requesting client application (CA) is the client application (CA) authorized to access the requested service indicates that the requesting client application (CA) is not the client application (CA) authorized to access the requested service.

19. Secure gateway device (SGD) of claim 17 or 18, wherein the communication environment (CE) includes an access control server (ACS), which maintains the access control data, the secure gateway device (SGD) being further adapted to at least one
- request the access control data from the access control server (ACS) prior to the receiving of the first request from the client application (CA);
- request the access control data from the access control server (ACS) upon the receiving of the first request from the client application (CA);
- request the access control data from the access control server in response to an update process to update the access control data.

20. Client application (CA) for controlling application-specific access to a secure network (SN) arranged within a communication environment (CE) including an access control server (ACS), wherein
- the secure network (SN) comprises a secure gateway device (SGD) providing access to the secure network (SN) for client applications (CA) external to the secure network (SN), and
- access control data identifying an authorized client application (CA) being authorized to access at least one service provided by the secure network (SN) and further identifying at least one service provided by the secure network (SN) to which service the authorized client application (CA) is authorized to access,
wherein
- client application (CA) is a client application (CA) external to the secure network (SN), and
- the client application (CA) is adapted to
- transmit a first request to the secure gateway device (SGD), the first request being an access request to access to the secure network (SN) and including information trustworthily identifying the requesting client application (CA);
- transmit a second request to the secure gateway device (SGD), in the case access to the secure network (SN) is granted if verifying, by the secure gateway device (SGD) on the basis of the information trustworthily identifying the requesting client application (CA) and the control access data, whether the requesting client application (CA) is the authorized client application (CA) indicates that the requesting client application (CA) is the authorized client application (CA), wherein the second request is a request to access a requested service provided by secure network (SN);
- access the requested service, in the case access to the requested service is granted if verifying, by the secure gateway device (SGD) based on the access control data, whether the requesting client application (CA) is the client application (CA) authorized to access the requested service indicates that the requesting client application (CA) is the client application (CA) authorized to access the requested service.
